# EUROPÄISCHE PATENTSCHRIFT

(11) **EP 1 778 450 B1**
(45) Veröffentlichungstag und Bekanntmachung des Hinweises auf die Patenterteilung: **29.05.2013**
(21) Anmeldenummer: 05763673.0
(22) Anmeldetag: 23.07.2005
(51) Int. Cl.: B29C 45/00

(54) **VERFAHREN ZUR HERSTELLUNG EINES ABDECKELEMENTS MIT GITTERARTIGEN STRUKTUREN**
METHOD FOR THE PRODUCTION OF A LATTICE-TYPE COVERING ELEMENT
PROCEDE DE PRODUCTION D'UN ELEMENT DE RECOUVREMENT AYANT DES STRUCTURES RETICULEES

(30) Priorität: 30.07.2004 DE 102004037361
(43) Veröffentlichungstag der Anmeldung: 02.05.2007
(73) Patentinhaber: HTI High Tech Industries AG, 4502 St. Marien bei Neuhofen (AT)
(72) Erfinder: PALLANITS, Josef, A-7372 Drassmarkt (AT)
(74) Vertreter: Ofner, Clemens
(86) Internationale Anmeldenummer: PCT/EP2005/008051
(87) Internationale Veröffentlichungsnummer: WO 2006/013030

(56) Entgegenhaltungen:
- WO-A-89/05225
- DE-A1- 10 312 248
- DE-C1- 19 728 820
- JP-A- 6 254 915
- US-A- 5 690 886
- US-A1- 2001 041 245
- US-A1- 2002 150 274
- [Online] XP002348433 Gefunden im Internet: URL:http://web.archive.org/web/20031011083 559/http://www.plasticstechnology.com/arti cles/200307cu5.html> [gefunden am 2003-10]
- XP002348434 Gefunden im Internet: URL:http://www.immnet.com/article_printabl e.html?article=2232> [gefunden am 2003-09]
- XP002348435 Gefunden im Internet: URL:https://www.plasticsportal.net/wa/EU/C atalog/ePlastics/doc/BASF/prodline/terblen d_n/processing.xdoc#N100D6> [gefunden am 2005-10-10]

## Beschreibung

### Gebiet der Erfindung

Die Erfindung betrifft ein Verfahren zur Herstellung eines Abdeckelements mit gitterartigen Strukturen zur Abdeckung von Lautsprechen und Lüftungsöffnungen mittels Kunststoff-Spritzguss. Grundsätzlich können derartige Abdeckelemente auch zur Abdeckung von Luft- beziehungsweise Lüfterbeziehungsweise Heizöffnungen oder sicherheitsrelevanten Öffnungen in Land-, Wasser- und Luftfahrzeugen sowie in Gebäuden und Geräten verwendet werden.

### Stand der Technik

Bekannter weise besteht eine Spritzgussmaschine im wesentlichen aus zwei Grundeinheiten. Diese sind die Spritz- und die Schließeinheit. Die Spritzeinheit besteht aus einem Zylinder, der beheizt ist, und einer Schnecke. Der Kunststoff, der in der Regel als Granulat verarbeitet wird, wird durch die Schnecke gefördert. Bei der Förderung schmilzt das Granulat durch die Wärme auf. Bei der Förderung bewegt sich die Schnecke nach hinten und baut an der Schneckenspitze ein Massepolster auf. Nach Ende der Förderung schiebt die Schnecke nach. vorne und spritzt dabei das geschmolzene Material, mit einem Druck von 600 - 1500 bar, in das Werkzeug, welches sich in der Schließeinheit befindet, ein. Die Schließeinheit besteht aus zwei Aufspannplatten, der Schließseite, die beweglich ist, und der Düsenseite, die feststeht. Spritzgusswerkzeuge bestehen in der Regel aus zwei Hälften, die jeweils auf jeweils einer der Seiten befestigt werden. Die Schließseite wird auf die Düsenseite gefahren, wobei der Zuhaltedruck beim Einspritzen bei den größten Spritzgussmaschinen bis zu 6000 Tonnen betragen kann. Nach Ablauf einer Abkühlphase öffnet sich das Werkzeug und das Formteil wird herausgenommen oder automatisch ausgestoßen.

Unter spritzgusstechnisch hergestellten Abdeckelementen mit gitterartigen Strukturen werden insbesondere Gebilde verstanden, die im Gegensatz zu vollflächigen räumlichen Spritzgussformkörpern eine Vielzahl von Öffnungen oder Durchbrüchen aufweisen. Das Öffnungsverhältnis ist vorzugsweise größer als 20%, insbesondere größer als 30%, wobei sich derart eine wesentlich größere Oberfläche als bei einem vollflächigen Spritzgussformkörper ergibt. Aufgrund der gitterartigen Strukturen besitzt ein solcher Formkörper ein wesentlich geringeres Kunststoff-Volumen von weniger als 20%, insbesondre weniger als 30% gegenüber einem vollflächigen Formkörper.

Spritzgusswerkzeuge zur Herstellung derartiger Gitterelemente weisen üblicherweise mehrere Anspritzkanäle auf, da nur durch eine Mehrzahl von Anspritzungen ein vollständiges Ausspritzen der Werkzeugform erreicht werden kann. Wenn nunmehr ein Werkzeug vor dem Einspritzen des Kunststoffs auf beispielsweise 60°C vorgewärmt wird, dann ist verständlich, dass beim mehrkanaligen Spritzguss mit einem thermoplastischen Material mit einer Temperatur von mehreren hundert Grad die in der Werkzeugform beziehungsweise Kavität eingeschlossene Luft durch die Erwärmung des einfließenden Kunststoffmaterials stark expandiert und die Entweichung dieser erwärmten Luft nur mit einer endlichen Geschwindigkeit vonstatten geht, so dass sich einen Gegendruck zum einfließenden Kunststoff aufbaut. Ferner ist verständlich, dass das eingepresste Kunststoffmaterial entlang der verwinkelten Fließwege der gitterartigen Strukturen stark abkühlt und derart beim Zusammentreffen zweier Phasenschmelzen eine sogenannte Bindenaht entsteht. Die Ausbildung dieser Bindenaht beeinflusst sehr wesentlich die physikalischen Eigenschaften des gitterartigen Spritzgusselementes.

In der DE 197 28 820 C1 wird eine Lautsprecher-Abdeckung aus einem Kunststoffmaterial mit einer Gitterstruktur mit einem Streckmetall-Effekt mit sich schiefwinkelig überkreuzenden äquidistanten Kunststoffrippen beschreiben. Diese Abdeckung besteht aus einem lackierbaren Kunststoffmaterial, insbesondere aus ABS (Acryl-Butadien-Styrol-Copolymeren) oder PPE (Polyphenylenether).

Neben der Verwendung von ABS und PPE wurde in den letzten Jahren POM (Polyacetal) verwendet, was jedoch zur Splitterbildung neigt und ohne Vorbehandlung nicht lackierbar ist. Zur Erhöhung der Schlagzähigkeit dieser gitterartigen Elemente wurde PA mit entsprechenden Additiven und farbgebenden Beimengungen eingesetzt. Bei der Verwendung von PA besteht das Problem der Dimensionsstabilität aufgrund der bekannten hygroskopischen Eigenschaften von PA. Eine Wasseraufnahme der Spritzgussteile führt insbesondere bei filigranen Strukturen zu Verformungen in Form von Beulen und Dellen. Um eine Ausspritzbarkeit der filigranen gitterartigen Stege und Kanäle und komplexen dreidimensionalen Gestaltung von Gitterelementen zu gewährleisten, müssen bei der Verwendung von PA sehr hohen Spritzgusstemperaturen teilweise weit über der zulässigen Verarbeitungstemperatur von PA (ca. 280-300°C) verwendet werden. Derartig hohe Temperaturen von bis zu 340° führen zu Zersetzungsprozessen im PA was wiederum zu starker Schlierenbildung und Fleckenbildung auf der Oberfläche des Spitzgussteils führt und derart einen hohen Ausschuss bewirkte-Zusätzlich müssen Gitterelemente auf Basis von PA vor der Lackierung einer Plasma- oder Fluor- oder Haftvermittlerbeschichtungs-Oberflächenbehandlung unterzogen werden, was die Herstellkosten sehr stark erhöht.

In der EP 0 722 986 B1 werden thermoplastische Polyamidformmassen aus 6 (A bis F) Polymeren beziehungsweise Füllstoffen, Zusatzstoffen und Verarbeitungshilfsmitteln genannt. Zur Mischung aus ABS/Polyamid wird festgehalten, dass diese aus dem Stand der Technik bekannten Mischungen im Hinblick auf die Phasenanbindung und die mechanischen Eigenschaften der Formkörper noch verbesserungswürdig sind und insbesondere die Bindenahtfestigkeit bei komplizierten Geometrien von Formkörpern unbefriedigend ist. Bindenähte entstehen an den Grenzflächen der Polymerschmelzen, welche bei komplexen räumlichen Ausgestaltungen der Spritzgussform an verschiedenen Stellen der Form eingespritzt werden müssen, um das Formteil vollständig zu füllen.

Im Kunststofftaschenbuch "Saechtling", 24. Ausgabe 1989, Carl Hanser Verlag München Wien, ISBN 3-446-15385-3 wird auf den Seiten 314-315 bereits festgehalten, dass erhöht schlagzähe PA entsprechende, meist feindispers zweiphasige Legierungen mit ABS, EP(D)M, SBR, Acrylat- o.a. Synthesekautschuken bis zu Kerbschlagzähigkeiten "ohne Bruch" bei -40°C im Übergang zu flexiblen Einstellungen sind. Zudem wird auf Seite 317 festgehalten: "Das plötzliche Einfrieren der Schmelze bei Temperaturabfall, die Neigung zur Lunkerbildung bei größeren Schichtdicken und die Oxidationsempfindlichkeit der Schmelze bei Berührung mit Luft verursacht beim Spritzgießen große Schwierigkeiten."

Des Dokument JP-A-06254915 offenbart ein Verfahren gemäß dem Oberbegriff des Anspruchs 1.

### Offenbarung der Erfindung

Es war daher die Aufgabe der Erfindung, ein Verfahren zur Herstellung eines Abdeckelements mit gitterartigen Strukturen mittels Kunststoff-Spritzguss vorzuschlagen, durch welches der Spitzgussprozess vereinfacht, die Produkteigenschaften verbessert und die Herstellkosten insbesondere durch Verringerung des Ausschusses reduziert werden.

Diese Aufgabe wird durch ein Verfahren gemäß den Merkmalen des unabhängigen Patentansprüchs gelöst.

Weitere bevorzugte Ausgestaltungen und vorteilhafte Merkmale der Erfindung sind in den abhängigen Ansprüchen angegeben.

Erfindungsgemäß wurde die Lösung dieser komplexen Aufgabenstellung nach einem kostengünstigen Herstellverfahren bei Erfüllung der physikalischen Anforderungen und der attraktiven optischen Anmutung in der Verwendung von PA-ABS, insbesondere PA66-ABS, mit entsprechend eingestelltem und ausgeführten Spritzgusswerkzeug und einem entsprechenden Spritzgussverfahren gefunden.

Durch die vorliegende Erfindung werden die allgemeinen spritzgusstechnischen Vorteile von PA-ABS bei der Herstellung von gitterartigen Elemente ausgenutzt, wobei die bei der Verwendung von PA oder anderen Kunststoffen auftretenden Nachteile , wie die schlechte Phasenanbindung an Grenzstellen der Polymerschmelze im Bereich der sogenannten Bindenähte, vermieden werden. Auf diese Weise wird erfindungsgemäß die Herstellung eines gitterartigen Elementes ermöglicht, das eine hohe Formstabilität insbesondere in feuchter Umgebung aufweist, keine Dellen und Beulen bildet, keine Schlieren, Sinkstellen und optisch sichtbare Bindenähte aufweist und ganz besonders eine hohe Pendelschlagfestigkeit, insbesondere bei niederen Prüftemperaturen, aufweist.

Auf Grund von Reihenversuchen wurde festgestellt, dass das Fließverhalten des Kunststoffs in den üblichen Spritzgusswerkzeugen zur Herstellung von gitterartigen Elementen bei Verwendung von PA-ABS Mischungen besonders gut ist und eine derart gute Phasenanbindung gewährleistet, dass eine Reduktion der Spritzgusstemperatur auf beziehungsweise unter die vom Spritzgussgranulathersteller genannten maximalen Verarbeitungstemperaturen im Bereich 280°C bis 300°C möglich ist.

Als geeignete PA-ABS Rohstoffe seien hier beispielhaft die ABS-PA Blends der Firma BASF mit der Typenbezeichnung TERBLEND N® (ABS+PA6), der Firma BAYER mit der Typenbezeichnung TRIAX® (ABS+PA) oder der Firma A. Schulman mit der Typenbezeichnung Schulablend®-POLYMAN (ABS/PA) M/MK genannt.

Die wesentlichen Vorteile bei der Verwendung dieser speziellen Kunststoffmischung aus PA-ABS gegenüber bisher üblicherweise verwendeten Kunststoffen aus PA, insbesondere PA66, oder ABS oder PPE oder Acryl oder POM oder PC oder PP oder einem Blend aus den genannten Kunststoffen, dem verwendeten speziellen Spritzgussverfahren und dem verwendeten speziellen Spritzgusswerkzeug zur Herstellung eines derartigen gitterartigen Elements mit einem Öffnungsverhältnis von größer 20%, insbesondere größer 30%, liegt in der Möglichkeit, die Temperaturbelastung des Kunststoffs auf unter 280°C zu halten und derart einen geringen Ausschuss zu erzielen. Damit werden günstige Herstellkosten bei gleichzeitig hervorragenden Eigenschaften, wie einer hohen Schlagfestigkeit, einer guten Dimensionsstabilität, einer guten Oberflächenbeschaffenheit, eine leichten Lackierbarkeit ohne zusätzliche Oberflächenbehandlungen und der sehr guten chemischen Beständigkeit erreicht.

Ganz wesentlich bei der Herstellung von gitterartigen Elementen mittels Spritzguss und der Verwendung von mehreren bis vielen Anspritzkanälen im Spritzgusswerkzeug ist die gute Bindenahtfestigkeit beziehungsweise Phasenanbindung an den Grenzflächen der einzelnen Polymerschmelzen. Gemäß eine bevorzugten Ausgestaltung der Erfindung wird dies dadurch erreicht, dass die Spritzgusskavität vor dem Einpressen der heißen thermoplastischen Spritzgussmasse mit einem Inertgas beaufschlagt wird. Alternativ oder zusätzlich kann das Granulat im Einfülltrichter vor der Plastifizierungsschnecke ebenfalls mit Inertgas beaufschlagt werden.

Sehr wesentlich dabei ist, dass der Ausschuss von Spritzgussteilen aufgrund von Schlierenbildung wesentlich reduziert werden konnte, wobei das Temperaturprozessfenster wesentlich produktionsfreundlicher, beispielsweise im Bereich von 250°C bis 280° gewählt werden konnte, was gegenüber dem bisherigen Prozessfenster von +/- 5°C bei Temperaturen bis zu 340°C eine ganz wesentliche Verbesserung darstellt. Zusätzlich stellt die Erwärmung bis zu 340°C eine Überhitzung und dadurch einhergehend eine Oberflächen Migration der Additive und Pigmente des thermoplastischen PA Materials dar.

Um diese Vorteile generieren zu können, müssen jedoch einige Spritzgussparameter sehr sorgfältig an die Verwendung der PA-ABS Mischung angepasst werden. So muss beispielsweise der Einspritzdruck um 100 bis 150 bar gegenüber der Verwendung von PA erhöht werden. Ferner muss eine im Vergleich zu PA schnellere Einspritzung durchgeführt werden, so dass derart Fliesswege von bis zu 220 mm ausgespritzt werden können.

Durch die Verwendung von PA-ABS für die Herstellung dieser gitterartigen Elemente kann ferner eine Lackierung durchgeführt werden ohne vorhergehende Oberflächenbehandlung in Form einer Plasmabehandlung oder einer Fluorbehandlung oder der Anbringung einer Haftvermittlerschicht (Primer). In vielen Fällen ist jedoch die Farbeinstellung des PA-ABS derart gut wählbar und die Oberflächenanmutung derart gut, dass auf eine Oberflächenlackierung verzichtet werden kann.

Im Gegensatz zur Verwendung von PA wird bei Verwendung von PA-ABS eine starke Reduktion der Wasseraufnahme des Kunststoffspritzlings erreicht. Dadurch ist ganz besonders bei Abdeckelementen mit gitterartigen Strukturen eine wesentlich geringere Neigung zu Beulen- und Dellenbildung in einer Umgebung mit hoher Luftfeuchtigkeit gegeben, was erneut zu einer Reduktion der Ausschussquote oder gänzlichen Unbrauchbarkeit der Spritzgusselemente führt.

In einer Weiterbildung des Herstellverfahrens bei der Verwendung von PA-ABS zum Spritzgießen von gitterartigen Elementen wurde festgestellt, dass bei Einleitung von trockenem inertem Gas, insbesondere Argon oder Stickstoff, in den konischen Endbereich des Granulattrichters mit der Strömungsrichtung nach oben eine Verdrängung von Wasserdampf und Sauerstoff auf der Granulatoberfläche und den Zwischenräumen erzielt, und dadurch Oxidation vermieden werden kann. Dadurch kann zusätzlich eine Verbesserung der Oberfläche von gitterartigen Elementen durch Wegfall der oxidationsbedingten Fehlereinflüsse erreicht werden. Das trockene Gas wird dabei bevorzugt vorgewärmt in den Granulattrichter eingeleitet.

In einer weiteren Ausbildung der Erfindung wurde ermittelt, dass durch gezielte Beaufschlagung der Werkzeugkavitäten mit Inertgas, insbesondere Argon, die auftretende Oxidation der Schmelze vermieden wird und dadurch eine weitere zusätzliche Verbesserung der Bindenahtfestigkeit beziehungsweise Phasenanbindung an den Grenzflächen beim Zusammenfluss der Polymerschmelzen erreicht werden kann. Dabei kann die Werkzeugkavität mit einem kurzen Inertgasdruckstoß gespült werden. Vorzugsweise kann das Gas vorgeheizt auf die Werkzeugtemperatur eingepresst werden.

In einer weiteren Ausbildung der Erfindung wurde festgestellt, dass bei der Herstellung komplexer Abdeckformkörper mit einem integrierten gitterartigen Element die Verwendung einer Mehrschneckenspritzgusstechnik von Vorteil ist. Dabei wird beispielsweise zuerst das gitterartige Element mit der PA-ABS Komponente spritzgusstechnisch hergestellt und anschließend der vollflächige Formkörper als berandendes Verkleidungselement als zweite Komponente sich kraftschlüssig mit der ersten Komponente verbindend spritzgegossen.

Des weiteren wird bei gitterartigen Elementen der Einbau einer sogenannten Schattenfuge als vorteilhaft betrachtet. Die optische Fehlerfreiheit, insbesondre die Vermeidung von durch sinusförmig an den Form gebenden Domen vorbeifließenden Schmelze und den daraus resultierenden im Übergangsbereich nachwirkenden Sinuswellen (Memory Effekt) entstehenden Fließnähte kann damit reduziert beziehungsweise vermieden werden. Des weiteren können Sinkstellen, Schlieren und dergleichen optisch nicht akzeptable Mängel damit reduziert beziehungsweise vermieden werden.

In vorteilhafter Weise kann ein Spritzgusswerkzeug oder Teile davon aus Gas-durchlässigem Material gefertigt sein. Dadurch wird das Werkzeug leichter entlüftet, das heißt die in den Kavitäten des Werkzeug befindliche Luft bzw. Gas kann leicht entweichen, indem es durch das Gas-durchlässige Material diffundiert. Somit wird verhindert, dass durch Gas bedingte Fehler und Mängel wie schlechte Bindenahtfestigkeit durch Lufteinschluss an den Spritzgussprodukten auftreten.

In diesem Zusammenhang kann während des Einspritzvorganges auch eine Vakuumabsaugung der Luft bzw. des Gases innerhalb der Kavitäten der Spritzgusswerkzeuge vorgenommen werden. Durch Verwendung eines gezielt positionierten Werkzeugeinsatzes aus einem Gas-durchlässigen Materials für die Spritzgusswerkzeuge kann eine solche Vakuumabsaugung relativ leicht implementiert und dadurch die durch mit hoher Geschwindigkeit entweichende überhitzte und zu Verbrennungen führende Luft und der sich dadurch entwickelnde so genannte "Dieseleffekt" vermieden werden.

Einige Ausführungsbeispiele der Erfindung werden nachfolgend anhand der Zeichnungsfiguren näher beschrieben.

### Kurze Beschreibung der Zeichnungen

Es zeigt:
- Figur 1:: Darstellung einer beispielhaften Ausgestaltung eines Abdeckelements mit gitterartigen Strukturen gemäß der Erfindung;
- Figur 2:: Darstellung einer beispielhaften Ausgestaltung eines Abdeckelements mit gitterartigen Strukturen gemäß der Erfindung;
- Figur 3:: eine Mustergitterscheibe mit verschiedenen gitterartigen Strukturen;
- Figuren 4a-4i:: Detaildarstellung der verschiedenen gitterartigen Strukturen aus Figur 3;
- Figur 5:: ein Abdeckelement bestehend aus einem vollflächigen Formkörper und einem integrierten gitterartigen Element 2;
- Figur 6:: schematisch eine Spritzgussschnecke mit einem Granulattrichter und einem Inertgaseinlass;
- Figur 7:: schematisch die Bildseite (A-Seite) eines beispielhaften Spritzgusswerkzeuges zur Herstellung der erfindungsgemäßen Abdeckelemente;
- Figur 8:: schematisch die Kernseite (B-Seite) des beispielhaft dargestellten Spritzgusswerkzeuges;
- Figur 9:: die Kernseite des Spritzgusswerkzeugs gemäß Figur 8 aus einer seitlichen Perspektive;
- Figuren 10a, b, c:: ein beispielhaftes Einstelldatenblatt für eine Spritzgussmaschine gemäß der Erfindung:
- Figur 11:: schematisch ein Spritzgusswerkzeug mit Vorkehrungen zum Einsatz gasdurchlässiger Elemente für die Vakuumabsaugung;
- Figur 12:: Darstellung einer Ausnehmung in der Spritzgussform zum Einfügen eines gasdurchlässigen Einsatzes:
- Figur 13:: Darstellung eines gasdurchlässigen Einsatzes;
- Figur 14:: Darstellung der Spritzgussform mit Eingefügtem gasdurchlässigem Einsatz.

### Beschreibung von bevorzugten Ausgestaltungen der Erfindung

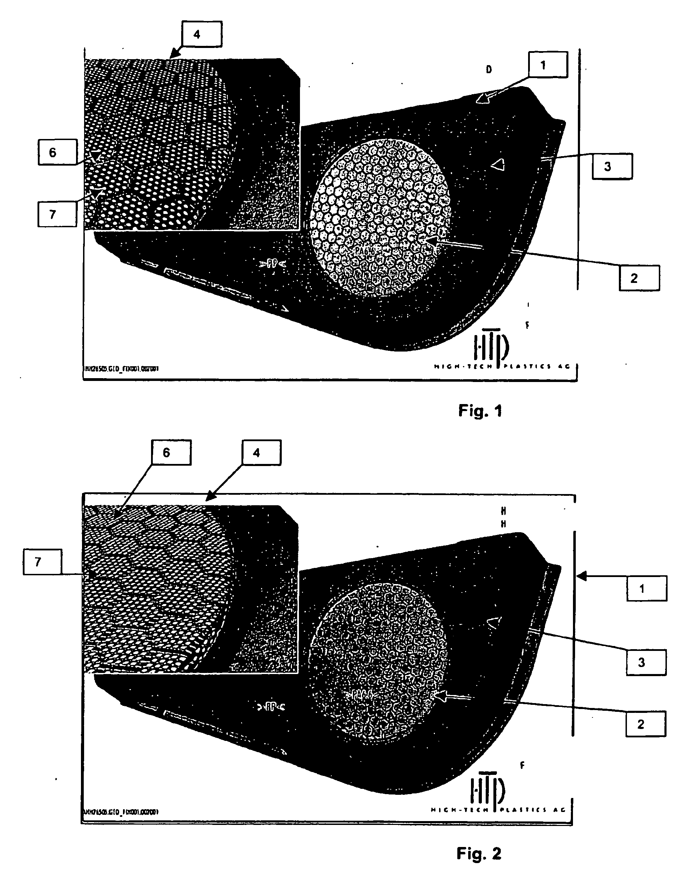

In Fig. 1 wird ein gemäß der Erfindung hergestelltes Abdeckelement 1 mit einer integrierten gitterartigen Struktur bildhaft dargestellt. Es handelt sich um ein Abdeckelement für Lautsprecherinstallationen in Fahrzeugen. Die gitterartige Struktur 2 wird dabei von einem vollflächigen dreidimensionalen Formkörper 3 berandend umgeben. Links oben ist eine vergrößerte Ansicht eines Ausschnitts der gitterartigen Struktur und ihrem Gitter-Design 4 dargestellt. Das Gitter-Design 4 umfasst eine der Sichtseite zugewandte Gitterstruktur 6, hier in Form einer Lochstruktur, und eine darunter angeordnete Gitter-Verstärkungsstruktur 7 in Form von sechseckigen Waben. Erfindungsgemäß können beide Strukturen 6, 7, also die sichtseitige Gitterstruktur 6 und die Gitter-Verstärkungsstruktur 7 sehr unterschiedlich ausgeführt werden.

Für die Funktion als Lautsprecherabdeckung und für die Funktion als Abdeckung einer Lüftungsöffnung ist das Öffnungsverhältnis insbesondere der sichtseitigen Gitterstruktur 6 sehr wesentlich. Die Gitter-Verstärkungsstruktur 7 wird aus Festigkeitsgründen und aus spritzgusstechnischen Gründen der sichtseitigen Gitterstruktur 6 unterlegt. Das gesamte Gitter-Design 4, 6, 7 muss der ästhetischen Anmutung entsprechen und den funktionellen Anforderungen genügen. Funktionelle Anforderungen sind beispielsweise der Schutz einer Lautsprechermembrane oder der Funktion als Metallersatz durch Kunststoff PA-ABS Diffusor Gitter bei einer Lüftungsöffnung. Ferner muss die Oberfläche der sichtseitigen Gitterstruktur 6 derart ausgebildet sein, dass beispielsweise Kleidungsstücke, wie Seidenstrümpfe und dergleichen empfindliche Gewebe, keinen Schaden bei der Berührung beziehungsweise beim Darüberstreifen erleiden

In Fig. 2 ist eine andere mögliche Ausbildung eines Abdeckelements 1 mit gitterartiger Struktur bildhaft dargestellt. Das Gitter-Design 4 umfasst eine der Sichtseite zugewandte Gitterstruktur 6, hier in Form von Kreisausschnitten, die durch sich schiefwinkelig überschneidende Rippen gebildet werden, und eine darunter angeordnete Gitter-Verstärkungsstruktur 7 in Form von sechseckigen Waben.

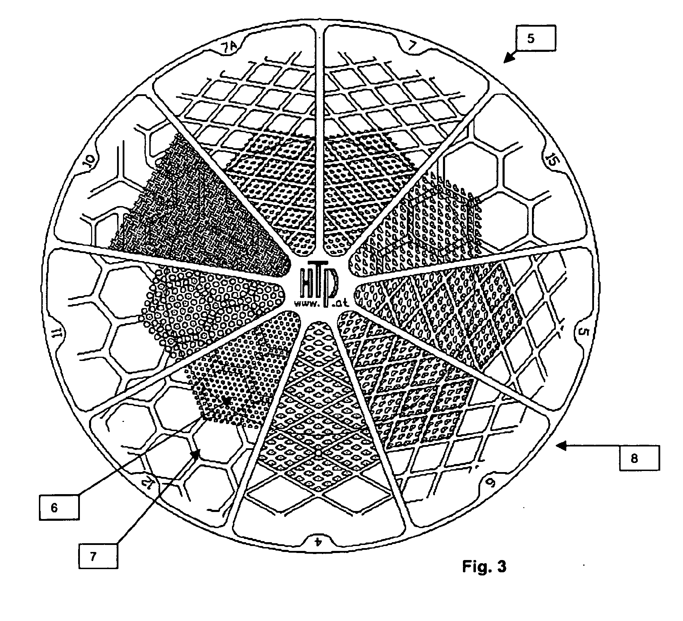

In Fig. 3 ist eine Mustergitterscheibe 5 dargestellt. In neun Sektoren werden beispielhaft unterschiedliche Designmöglichkeiten für gitterartigen Strukturen aufgezeigt, wobei jeweils eine sichtseitige Gitterstrukturen 6 und eine entsprechende Gitter-Verstärkungsstruktur 7 gezeigt ist. Die einzelnen Design Varianten mit den am Außenumfang der Scheibe angegebenen Bezeichnungen [4], [5], [6], [7], [7A], [10], [11], [12] und [15] weisen alle Offnungsverhältnisse größer als 20% bis hin zu 46,3% auf. Grundsätzlich können 3-D CAD Rechner unterstützte beliebige Offnungsverhältnisse generiert, gestaltet beziehungsweise gewählt werden. Dabei können die funktionellen Erfordernissen betreffend Design, Akustik, Durchlassoptimierung, Ästhetik und Stabilität mit den gestalterischen Überlegungen abgestimmt werden. Eine die äußere Begrenzungslinie des Gitters bildende Schattenfuge 8 soll einerseits gestalterisch den Abschluss des Gitters zum berandenden vollflächigen Formkörper definieren und hat zusätzlich spritzgusstechnisch den Vorteil, optisch sichtbare Mängel im vollflächigen Bereich zu vermeiden.

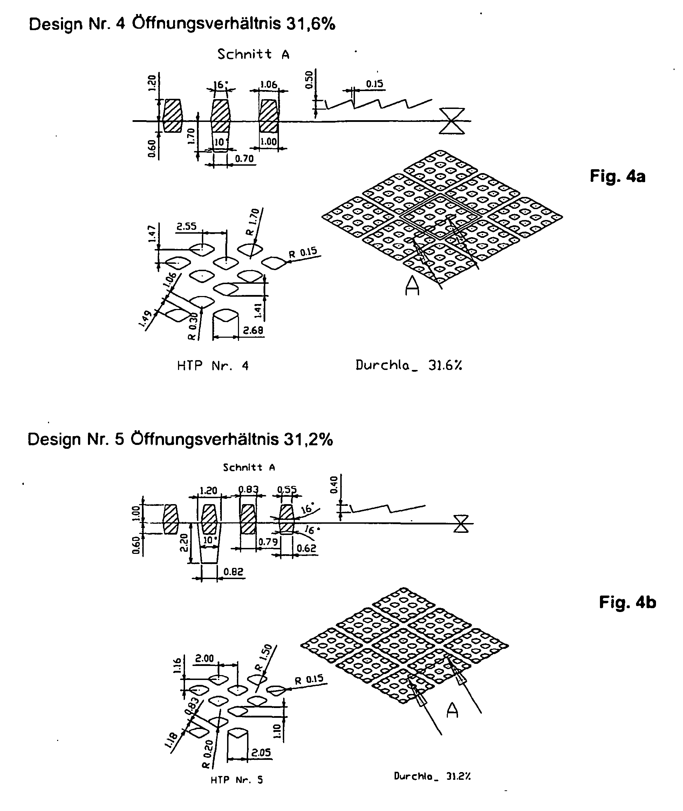

In Figuren 4a-4j sind die verschiedenen, in Figur 3 beispielhaft gezeigten Design-Varianten von gitterartigen Strukturen im Detail dargestellt.

Das Gitter-Design Nr. [4] in Figur 4a umfasst eine der Sichtseite zugewandte Gitterstruktur 6 in Form von Kreisausschnitten, die durch sich schiefwinkelig überschneidende Rippen gebildet werden, und eine darunter angeordnete, rautenförmige Gitter-Verstärkungsstruktur 7. Dieses Design weist ein Öffnungsverhältnis von 31,6% auf.

Das Gitter Design Nr. [5] in Figur 4b weist ein Öffnungsverhältnis von 31,2% auf und umfasst ebenfalls eine der Sichtseite zugewandte Gitterstruktur 6 in Form von Kreisausschnitten, die durch sich schiefwinkelig überschneidende Rippen gebildet werden, und eine darunter angeordnete, rautenförmige Gitter-Verstärkungsstruktur 7.

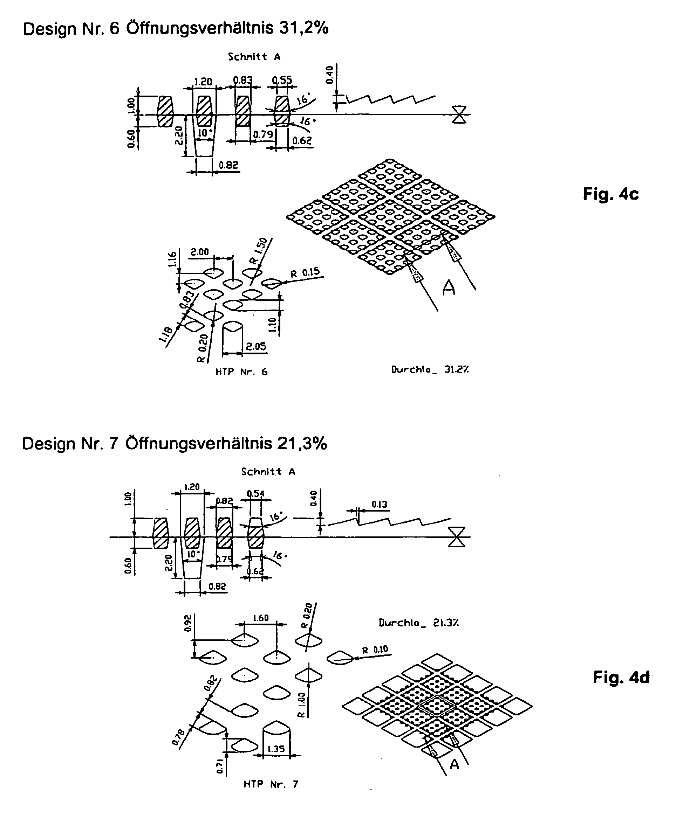

Das Gitter-Design Nr. [6] in Figur 4c weist ebenfalls ein Öffnungsverhältnis von 31,2% auf und umfasst eine der Sichtseite zugewandte Gitterstruktur 6 in Form von Kreisausschnitten, die durch sich schiefwinkelig überschneidende Rippen gebildet werden, und eine darunter angeordnete, rautenförmige Gitter-Verstärkungsstruktur 7.

Das Gitter-Design Nr. [7] in Figur 4d weist aufgrund sehr kleiner Öffnungen ein Öffnungsverhältnis von 21,3% auf und umfasst eine der Sichtseite zugewandte Gitterstruktur 6 in Form von Kreisausschnitten, die durch sich schiefwinkelig überschneidende Rippen gebildet werden, und eine darunter angeordnete, rautenförmige Gitter-Verstärkungsstruktur 7.

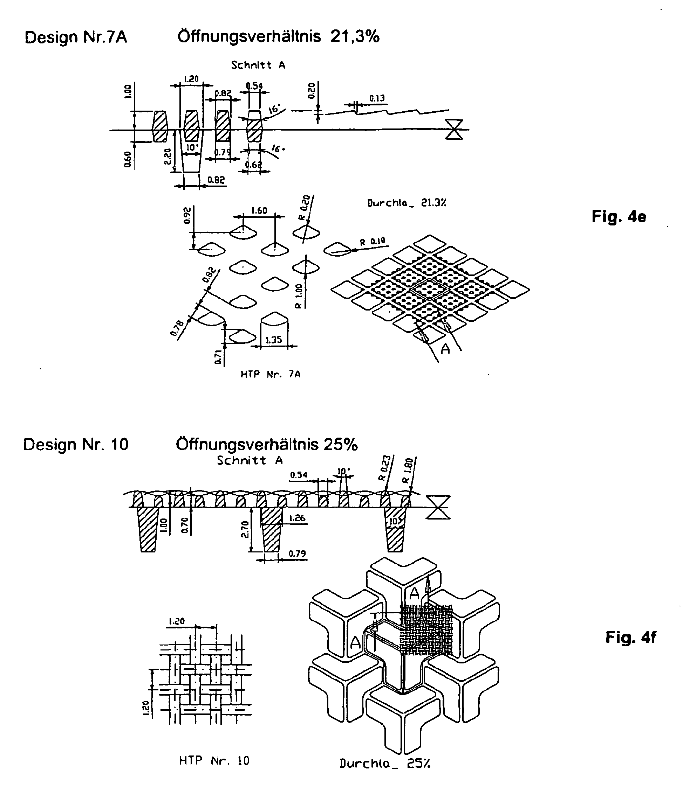

Das Gitter-Design Nr. [7A] in Figur 4e weist ebenfalls ein Öffnungsverhältnis von 21,3% auf umfasst eine der Sichtseite zugewandte Gitterstruktur 6 in Form von Kreisausschnitten, die durch sich schiefwinkelig überschneidende Rippen gebildet werden, und eine darunter angeordnete, rautenförmige Gitter-Verstärkungsstruktur 7.

Das Gitter-Design Nr. [10] in Figur 4f weist ein Öffnungsverhältnis von 25,0% auf und beruht auf der Verwendung von einem sichtseitigen Flechtgewebe 6 und einer unterlegten, daran angepassten etwa sternförmigen Verstärkungsstruktur 7.

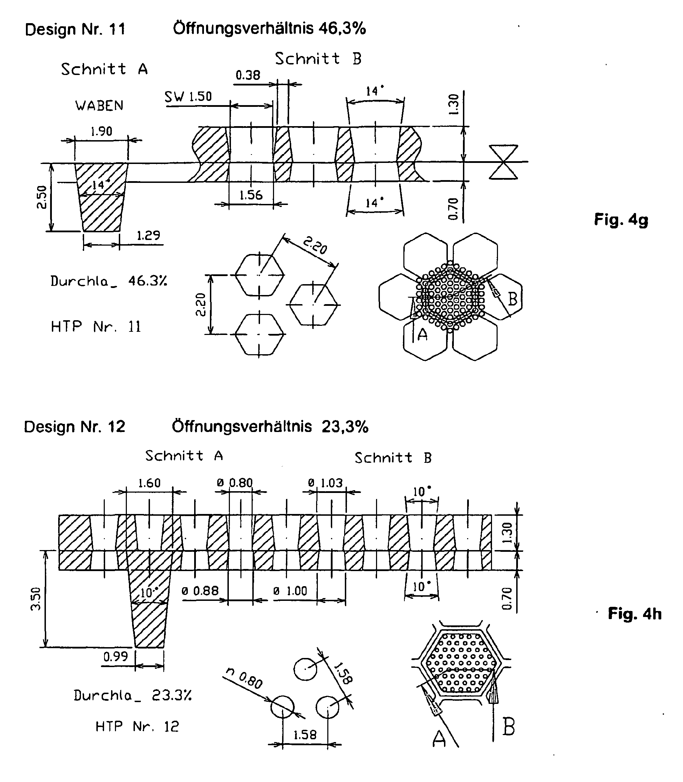

Das Gitter-Design Nr. [11] in Figur 4g weist ein Öffnungsverhältnis von 46,3% auf und beruht auf der Verwendung einer sichtseitigen Gitterstruktur aus sechseckigen Öffnungen 6 und einer darunter liegenden, sechseckigen Verstärkungsstruktur 7.

Das Gitter-Design Nr. [12] in Figur 4h weist ein Öffnungsverhältnis von 23,3% auf und beruht auf der Verwendung von runden Öffnungen 6 als sichtseitige Struktur und einer unterlegten, sechseckigen Verstärkungsstruktur 7.

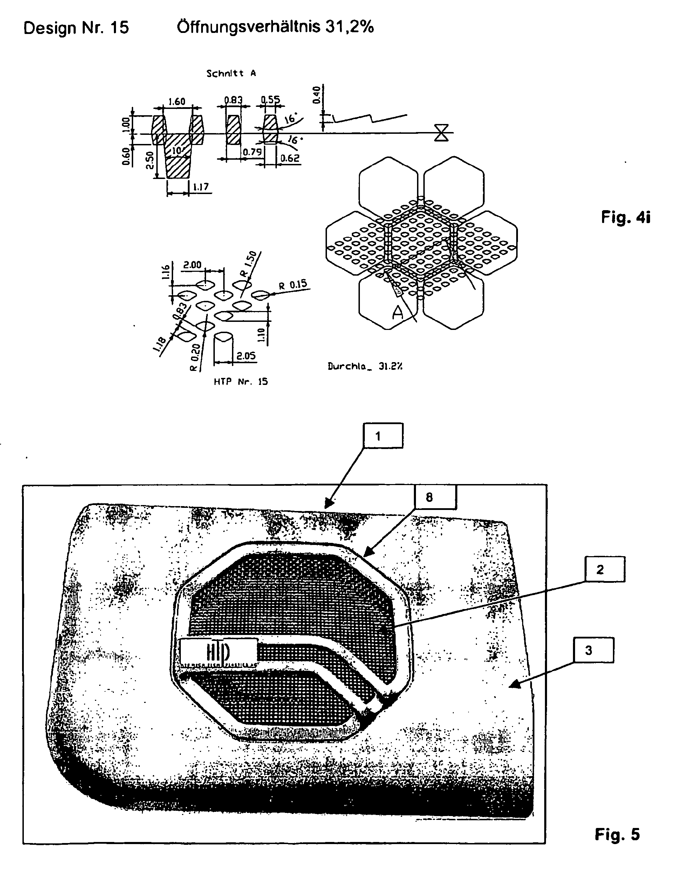

Design Nr. 15 in Figur 4i weist ein Öffnungsverhältnis von 31,2% auf und umfasst eine der Sichtseite zugewandte Gitterstruktur 6 in Form von Kreisausschnitten, die durch sich schiefwinkelig überschneidende Rippen gebildet werden, und eine darunter angeordnete, sechseckige Gitter-Verstärkungsstruktur 7.

In Fig. 5 ist ein Abdeckelement 1 bestehend aus einem vollflächigen Formkörper 3 und einem integrierten, mittels Mehrkomponenten Spritzgusstechnik hergestellten kraftschlüssig verbundenen gitterartigen Element 2 dargestellt. Eine Schattenfuge 8 berandet das gitterartige Element 2. In dieser bildhaften Darstellung ist ersichtlich, dass in dieser Zweischneckenspritzgusstechnik unterschiedliche Kunststoffe verwendet werden können. Es können dabei unterschiedliche Einfärbungen als auch unterschiedliche thermoplastische Materialien verwendet werden, z.B. PA-ABS für die gitterartige Struktur und ABS für das umgebende vollflächige Teil.

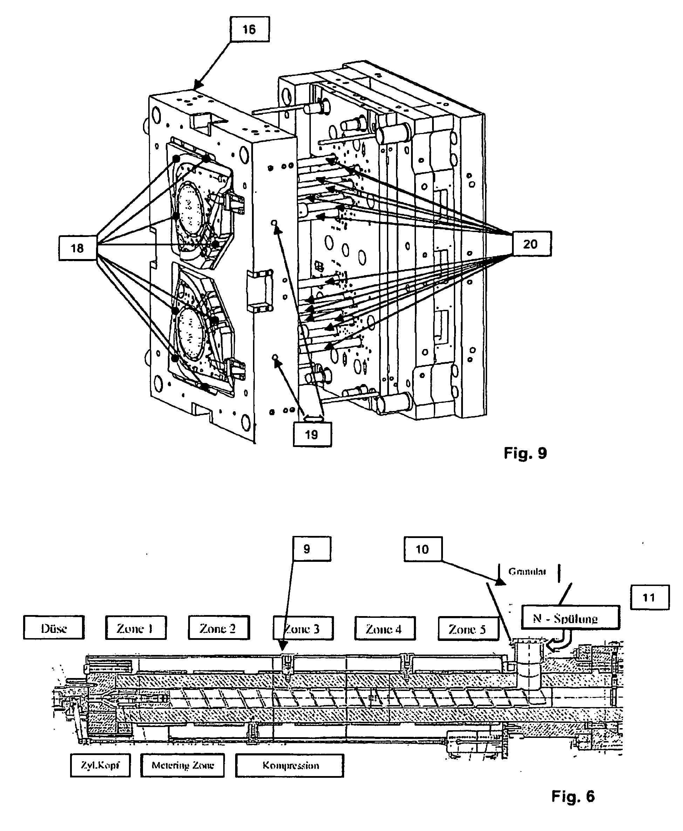

In Fig. 6 ist schematisch eine Spritzgussschnecke 9 mit einem Granulattrichter 10 und einem Inertgaseinlass 11 aufgezeigt. Als Inertgas wird bevorzugt trockener Stickstoff oder Argon verwendet. Der Gaseinlass 11 liegt unmittelbar oberhalb der Plastifizierungszone der Schnecke und derart am spitzen Ende (Mündung) des Trichters 10. Der Gaseinlass 11 ist nur schematisch dargestellt und kann ringartig durch mehrere Zuführungen erfolgen. Die Gasbeaufschlagung kann mit relativ geringem Überdruck von typisch größer 0,5 bar erfolgen. In einer Weiterführung der Erfindung wird das Gas leicht vorgewärmt zugeführt. Durch die Zufuhr von Inertgas in den Trichter wird die in den Zwischenräumen des Granulats befindliche Luft durch das Inertgas verdrängt und ein Oxidationseinfluss des sich erwärmenden Granulats vermieden

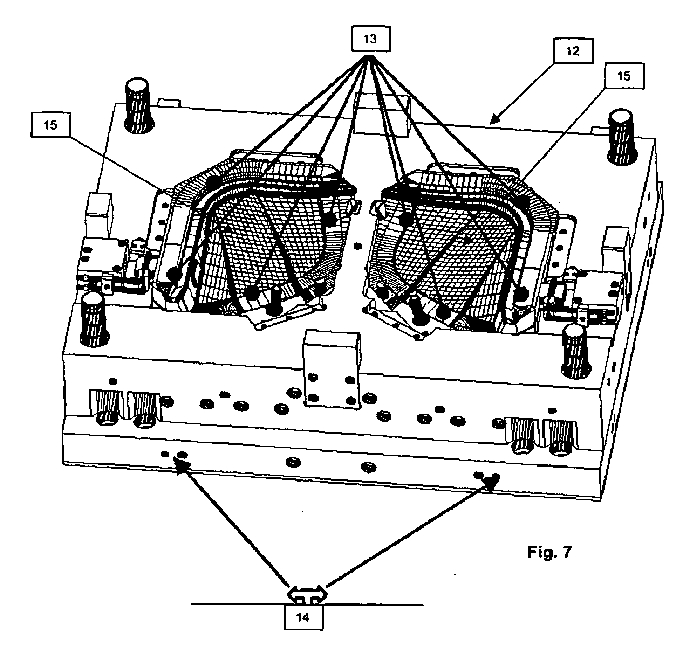

In Fig. 7 wird schematisch die Bildseite 12 (A-Seite) eines beispielhaften Spritzgusswerkzeuges zur Herstellung der erfindungsgemäßen Abdeckelemente aufgezeigt. Es können hier Abdeckelemente für Lautsprecherinstallationen in Fahrzeugen produziert werden, und zwar immer gleichzeitig ein rechtes und ein linkes Abdeckelement. Zusätzlich zu den allgemein bekannten Elementen eines Spritzgusswerkzeugs sind Gasinjektoren 13 vorhanden, über die die Kavitäten 15 des Werkzeuges mit Gas belüftet werden können. Die Gasinjektoren umfassen Einlassventile mit konischem Abschlusselement und einer Schließfeder, die nur bei der Beaufschlagung mit Gas eines entsprechenden Druckes geöffnet werden. Die Zuleitung 14 des Inertgases zu den Gasinjektoren 13 erfolgt seitlich am Spritzgusswerkzeug. Das Inertgas, bevorzugt Argon oder Stickstoff, wird kurz vor dem Hochdruckaufbau der beiden Werkzeughälften durch eine kurzzeitige Druckbeaufschlagung in die Werkzeugkavitäten 15 gepresst, wodurch die in den Kavitäten vorhandene, oxidationsbildende und durch Erwärmung wasserdampfbildende Luft verdrängt wird. Bei einem typischen Lautsprechergitter für ein Mittelklasseauto beträgt das Luftvolumen der Kavitäten 15 etwa 0,2 Liter. Dieses Luftvolumen wird nunmehr gegen Inertgas ausgetauscht. Dabei spielt der exakte Zyklusablauf eine sehr wesentliche Rolle. Das Spritzgusswerkzeug beziehungsweise die Kavitäten 15 sind üblicherweise auf 60°C bis zu 80°C und darüber erwärmt. Die Spritzgussmasse wird mit etwa 250°C bis zu 280°C beziehungsweise unterhalb der für die jeweilige thermoplastische PA-ABS Mischung maximal erlaubten Temperatur eingepresst und bewirkt eine Erwärmung und Kompression des Gases in der Kavität. Kurz vor dem Einspritzvorgang werden die Werkzeughälften mit sehr hohem Druck z.B. 6000kN meist mittels Kniehebeln geschlossen. Für das Entweichen des erhitzten Gases müssen sehr feine Schlitze mit Abmessungen im Bereich von etwa 0,02 mm in der Werkzeugtrennebene an speziell dafür zu ermittelnden Positionen eingearbeitet werden. Gleiches gilt für die gasdurchlässigen Elemente für die Vakuumabsaugung. Ganz wesentlich ist dabei, dass die einfließende erwärmte Schmelze nicht mit Sauerstoff beziehungsweise Wasserdampf enthaltender komprimierter Luft in Berührung kommt, da dann die Phasengrenzen der zusammenfließenden Schmelzen in der gitterartigen Spritzgussstruktur Bindenähte entstehen, die zu einer Materialschwächung führen und bei einem Pendeltest, insbesondere bei Minustemperäturen, wie beispielsweise -10°C, leicht getrennt werden können.

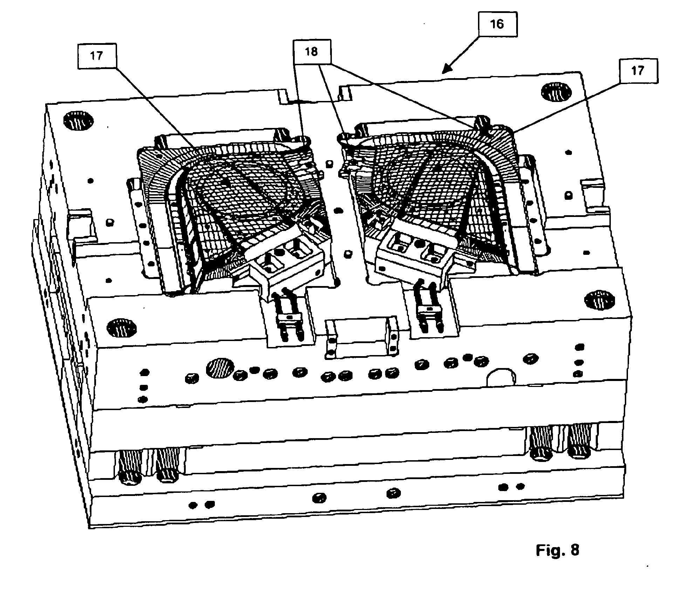

In Fig. 8 wird schematisch die Kernseite 16 (B-Seite) des beispielhaft dargestellten Spritzgusswerkzeuges aufgezeigt. Für die kernseitigen Kavitäten 17 können ebenfalls, wie für die bildseitigen Kavitäten 15, Injektoren 18 zur Einbringung eines Intergases vorgesehen sein. Allerdings weist typischerweise das kernseitige Spritzgusswerkzeug meist etwa 70% der Technik eines Spritzgusswerkzeuges auf, also unter anderem die Heißkanalanspritzdüsen und kaskadisch gesteuerte Düsen, die diversen Schieber für die Entformung von Hinterschnitten und dergleichen Elemente.

In Fig. 9 ist die Kernseite 16 des Spritzgusswerkzeugs aus einer seitlichen Perspektive dargestellt. Die Gasinjektoren 18 sind hierbei schematisch an den bevorzugten ungefähren Positionen dargestellt und die Zuleitungen 19 für das Inertgas an einer Seitenfläche des Spritzgusswerkzeuges. Ebenfalls dargestellt sind die diversen Heißkanal-Düsen 20, über die der PA-ABS Kunststoff den einzelnen Abschnitten der Kavitäten zugeführt wird,

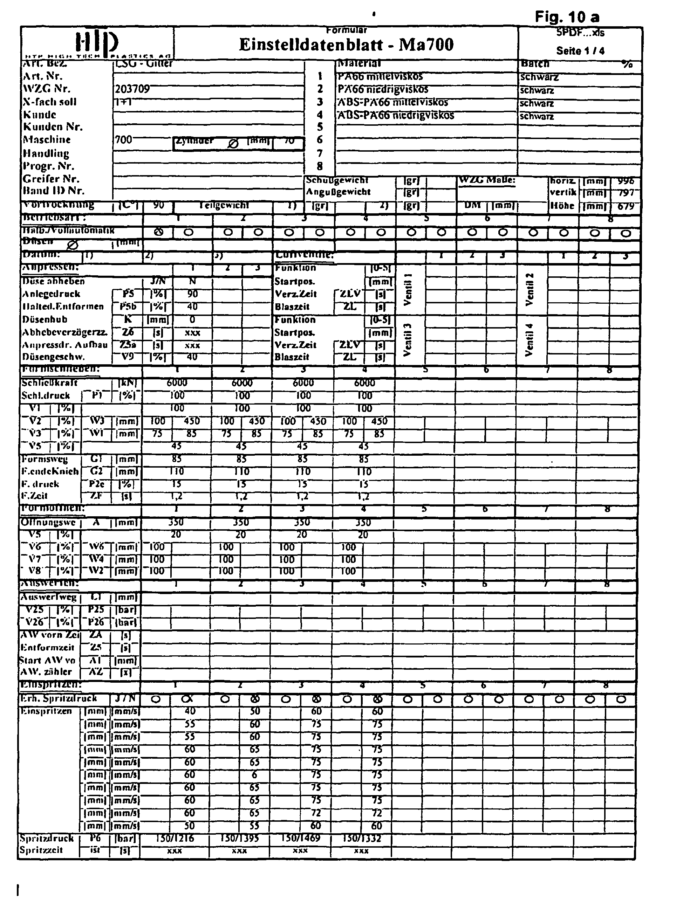

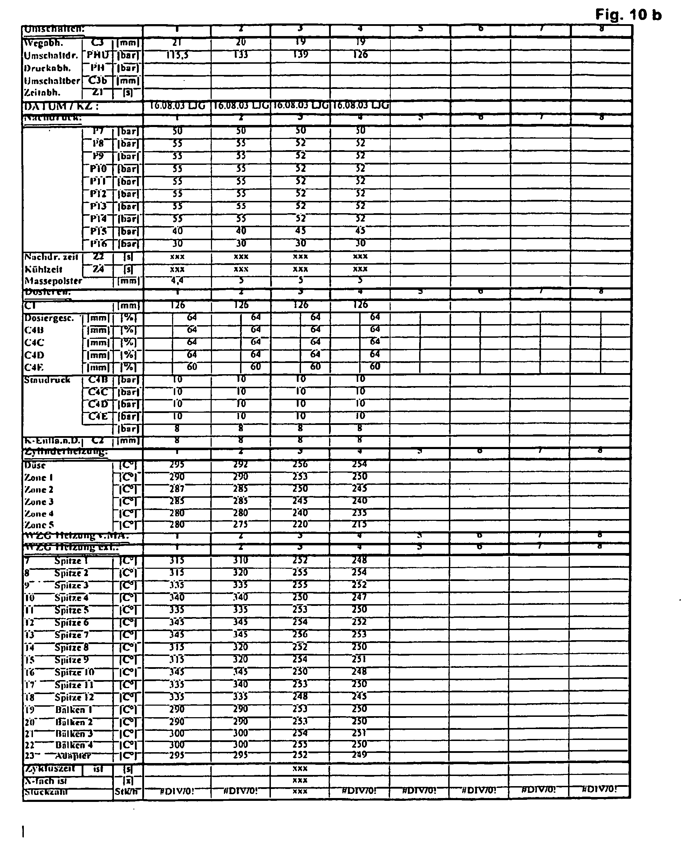

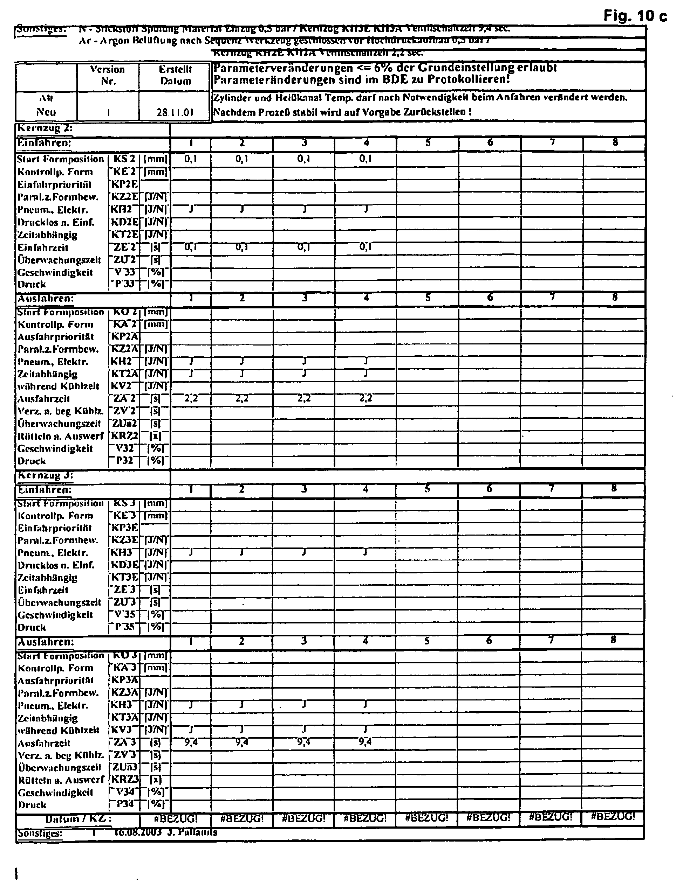

In den Figuren 10a, b, c ist ein beispielhaftes Einstelldatenblatt für eine Spritzgussmaschine angeführt. Darin werden die diversen Spritzgussparameter, insbesondere Temperaturen, Drücke und Schließkräfte des Spritzgusswerkzeuges für vier Spritzgussmaterialien vergleichend genannt. Wie sich aus Figur 10a, rechts oben, ergibt, wurden als Spritzgussmaterialien PA66 mittelviskos und niedrigviskos gewählt, sowie ABS-PA66 mittelviskos und niedrigviskos. In den Spalten 1 bis 4 werden die Einstallparameter für die verschiedenen Materialien direkt miteinander verglichen.

Wesentliche Unterschiede zeigen sich zum einem im erhöhten Einspritzruck und der höheren Einspritzgeschwindigkeit für die PA66-ABS Materialien im Vergleich zu den PA66 Materialien, was in Figur 10a unten aufgezeigt ist. Der Einspritzdruck ist, je nach Einspritzdüse, bei PA66-ABS um 100-150 bar gegenüber PA66 erhöht, die Einspritzgeschwindigkeit erhöht sich dabei etwa um 10%-50%. Durch die Möglichkeit des weit niedrigeren Temperaturprofils und der dadurch materialschonenden Verarbeitung und der weiteren dadurch möglichen Druckerhöhung bei PA66-ABS und der damit verbundene höhere Einspritzgeschwindigkeiten lassen sich längere und filigranere Kavitäten ausspritzen.

Weitere wesentliche Unterschiede zwischen PA66 und PA-ABS ergeben sich bei den Temperaturen innerhalb der Spritzgussschnecke 9 in Figur 6. Etwa in der Mitte von Figur 10b sind die Temperaturverteilungen in den einzelnen Zonen bzw. der Düse der Spritzgussschnecke aufgelistet. Man erkennt, dass bei der Verwendung von PA66 die höchsten Temperaturen (der Düse) bis zu 295° C betragen, während bei der Verwendung von PA66-ABS (an der Düse) nur Temperaturen von maximal 256°C erreicht werden.

Direkt darunter sind die Temperaturen der Kunststoffmasse im Bereich der Einspritzdüsen bzw. den Zuführbalken dargestellt. Man erkennt, dass bei der Verwendung von PA66 die höchste Temperatur an den Einspritzdüsen (Spitzen) bis zu 345° C beträgt, während bei der Verwendung von PA66-ABS an den Einspritzdüsen nur Temperaturen von maximal 256°C benötigt werden.

Diese geringeren Verarbeitungstemperaturen für PA66-ABS sind materialschonend und stellen eine verbesserte Qualität der Spritzgussteile gegenüber Teilen aus PA66 sicher.

Ein weiteres Merkmal der Erfindung ist die Möglichkeit der kaskadierenden Ansteuerung der Heißkanäle, das heißt die rechnergestützte und individuelle Ansteuerung der außenliegenden Heißkanaldüsen. Dadurch können die Position und Qualität der Fließnähte kontrolliert werden und speziell bei gitterartigen Spritzgusselementen das Zusammentreffen zweier oder mehrerer Schmelzen in optimale Bereiche gesteuert werden.

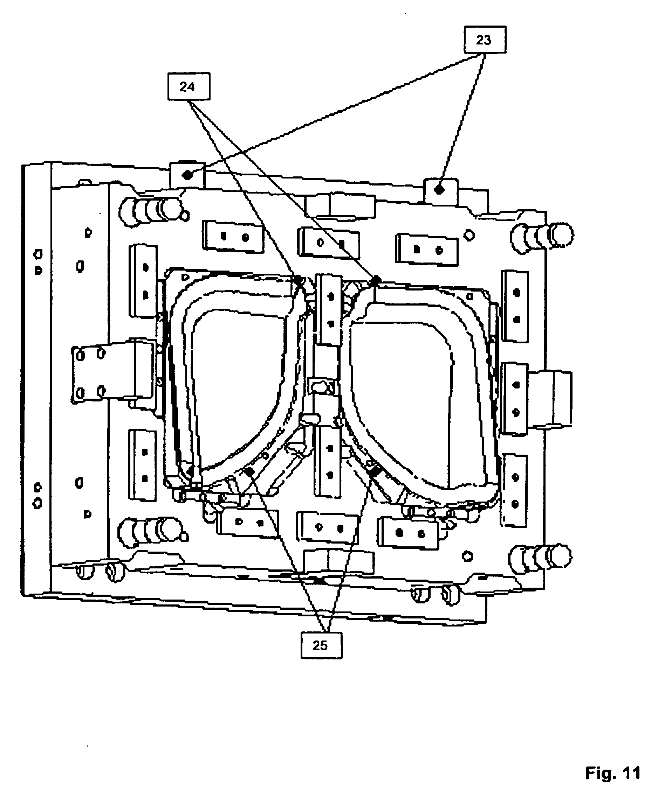

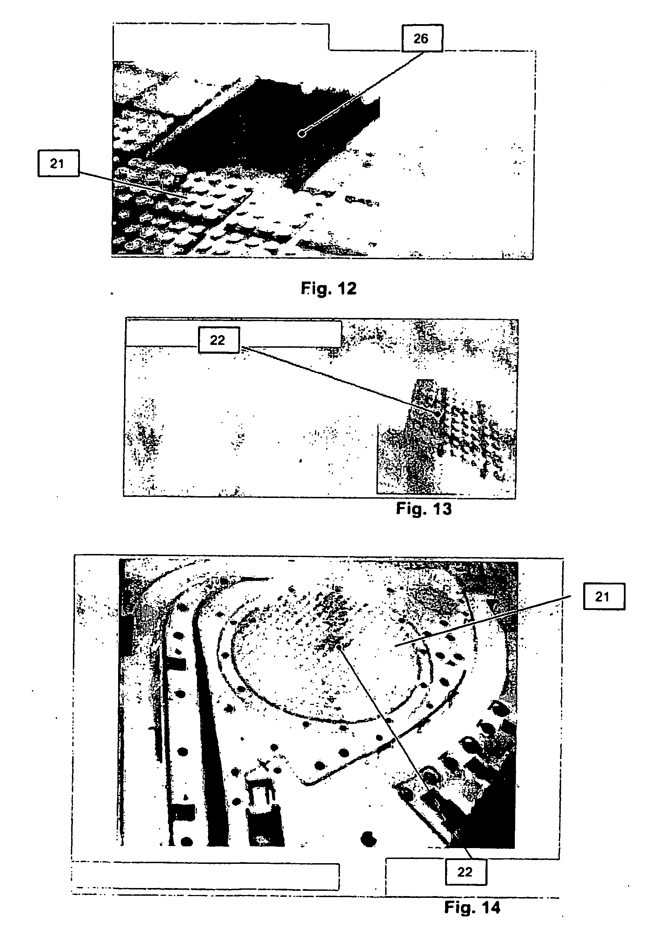

Wie sich aus den Figuren 11 bis 14 ergibt, kann ein Spritzgusswerkzeug 21 oder Teile davon, vorzugsweise ein in eine Ausnehmung des Werkzeugs einsetzbares Element 22 aus Gas-durchlässigem Material gefertigt sein. Dadurch wird das Werkzeug 21 leichter entlüftet, das heißt die in den Kavitäten des Werkzeug befindliche Luft bzw. Gas kann leicht entweichen, indem es durch das Gas-durchlässige Material diffundiert. Somit wird verhindert, dass durch Gas bedingte Fehler und Mängel wie schlechte Bindenahtfestigkeit durch Lufteinschluss an den Spritzgussprodukten auftreten.

In diesem Zusammenhang kann während des Einspritzvorganges auch eine Vakuumabsaugung der Luft bzw. des Gases innerhalb der Kavitäten der Spritzgusswerkzeuge 21 vorgenommen werden. Über Vakuum-Anschlüsse 23 und Steigbohrungen 24 werden die Kavitäten des Werkzeugs vakuumiert. Hierbei muss ein rundumlaufendes Abdichtungselement 25 vorgesehen werden. Durch Verwendung eines gezielt positionierten Werkzeugeinsatzes 22 aus einem Gas-durchlässigen Materials für die Spritzgusswerkzeuge kann eine solche Vakuumabsaugung relativ leicht implementiert und dadurch die durch mit hoher Geschwindigkeit entweichende überhitzte und zu Verbrennungen führende Luft und der sich dadurch entwickelnde so genannte "Dieseleffekt" vermieden werden.

Die nachfolgenden Tabellen zeigen Ergebnisse von Bruchtests mittels Pendelschlagprüfung. Es wurden Lautsprechergitter aus PA66 und PA-ABS geprüft. Je Werkstoff wurden zehn Lautsprechergitter geprüft. Fünf Lautsprechergitter wurden bei Raumtemperatur (RT) gelagert. Fünf Lautsprechergitter wurden für 12h in Wasser gelagert, danach entnommen und für weiter 4h an Raumluft gelagert. Jeweils zwei der 2 x 5 Lautsprechergitter wurden ca. 30 Min. in einer Kältekammer gelagert und unmittelbar vor der Prüfung entnommen, so dass die Temperatur der Lautsprechergitter zum Zeitpunkt der Prüfung -10°C betrug.

Im Ergebnis zeigt sich, dass PA-ABS gegenüber reinem PA66 sehr viel widerstandsfähiger ist, insbesondere bei niederen Temperaturen.

**Tabelle 1: Bruchtest mittels Pendelschlagprüfung Gitterartiges Formteil VL Material: PA66**

| | Feuchtegehalt | Prüftemperatur | Teilebezeichnung | Prüfgeschwindigkeit 2,5 m/s | Prüfgeschwindigkeit 3,5 m/s |
|---|---|---|---|---|---|
| 1 | trocken | RT | VL | OK | **Bruch** |
| 2 | trocken | RT | VL | OK | **Bruch** |
| 3 | trocken | RT | VL | OK | **Bruch** |
| 4 | trocken | -10 °C | VL | OK | **Bruch** |
| 5 | trocken | -10 °C | VL | OK | **Bruch** |
| 6 | feucht - 1,2% | RT | VL | OK | OK |
| 7 | feucht - 1,1% | RT | VL | OK | OK |
| 8 | feucht - 1,0% | RT | VL | OK | OK |
| 9 | feucht - 1,0% | -10 °C | VL | OK | OK |
| 10 | feucht - 0,9% | -10 °C | VL | OK | OK |

**Tabelle 2: Bruchtest mittels Pendelschlagprüfung Gitterartiges Formteil VL Material: PA-ABS**

| | Feuchtegehalt | Prüftemperatur | Teilebezeichnung | Prüfgeschwindigkeit 2,5 m/s | Prüfgeschwindigkeit 3,5 m/s |
|---|---|---|---|---|---|
| 1 | trocken | RT | VL | OK | OK |
| 2 | Trocken | RT | VL | OK | OK |
| 3 | trocken | RT | VL | OK | OK |
| 4 | trocken | -10°C | VL | OK | **Bruch** |
| 5 | trocken | -10°C | VL | OK | OK |
| 6 | feucht - 0,9 % | RT | VL | OK | OK |
| 7 | feucht - 0,8% | RT | VL | OK | OK |
| 8 | feucht - 0,7% | RT | VL | OK | OK |
| 9 | feucht - 0,7% | -10 °C | VL | OK | OK |
| 10 | feucht - 0,8% | -10 °C | VL | OK | OK |

### Bezugszeichenliste

| | |
|---|---|
| 1 | Abdeckelement (Formkörper) |
| 2 | Gitterartige Struktur |
| 3 | Vollflächiger Formkörper (berandendes Verkleidungselement) |
| 4 | Gitter-Design |
| 5 | Muster-Gitter-Scheibe |
| 6 | Gitterstruktur (Sichtseite) |
| 7 | Gitter-Verstärkungsstruktur |
| 8 | Schattenfuge |
| 9 | Spritzgussschnecke |
| 10 | Granulattrichter |
| 11 | Inertgaseinlass |
| 12 | Spritzgusswerkzeug Bildseite (A-Seite) |
| 13 | Gasinjektoren (Bildseitiger Auslass für die Kavität-Belüftung/Spülung) |
| 14 | Zuleitung bildseitiges Werkzeug für Inertgas |
| 15 | Kavität Bildseite |
| 16 | Spritzgusswerkzeug Kernseite (B-Seite) |
| 17 | Kavität Kernseite |
| 18 | Gasinjektoren (Kernseitiger Auslass für die Kavität-Belüftung/Spülung) |
| 19 | Zuleitung kernseitiges Werkzeug für Inertgas |
| 20 | Heißkanal Düsen |
| 21 | Spritzgusswerkzeug |
| 22 | gasdurchlässiges Element |
| 23 | Vakuum Anschlüsse |
| 24 | Vakuum Steigbohrungen |
| 25 | Abdichtungselement |
| 26 | Ausnehmung |

## Patentansprüche

1. Verfahren zur Herstellung eines Abdeckelements (1) mit gitterartigen Strukturen (2) zur Abdeckung von Lautsprecher- und Lüftungsöffnungen im Kunststoff-Spritzgussverfahren, wobei das Abdeckelement (1) als Teil eines Formkörpers, wie eines Verkleidungselementes, hergestellt wird und nur in Teilen seiner Fläche gitterartige Strukturen (2) umfasst, wobei diese gitterartigen Strukturen randseitig von dem vollflächigen Formkörper (3) umgeben werden, wobei das Abdeckelement (1) mittels Mehrkomponentenspritzguss hergestellt wird, wobei die gitterartigen Strukturen (2) in einem eigenen Spritzgussvorgang mit einem nicht gitterartigen Formkörper (3) in einem zweiten Spritzgussvorgang kraftschlüssig verbunden und zu einem einteiligen kompletten Formkörper gefertigt werden, wobei die gitterartigen Strukturen (2) eine Vielzahl von Öffnungen aufweisen, wobei die gitterartigen Strukturen zumindest teilweise von einer Schattenfuge umgeben sind, um die Bildung von unerwünschten Fließnähten zu reduzieren oder zu vermeiden, die durch die sinusförmig an formgebenden Domen vorbei fließende Schmelze und den daraus resultierenden, im Übergangsbereich nachwirkenden Sinuswellen entstehen, **dadurch gekennzeichnet, dass** das Verhältnis der Öffnungsfläche zur Gesamtfläche der Strukturen im Vergleich zu einem entsprechenden vollflächigen räumlichen Spritzgussformkörper größer als 20%, insbesondere größer 30% ist, wobei zumindest die gitterartigen Strukturen (2) des Abdeckelements aus einer Mischung von Polyamid (PA) und Acryl-ButadienStyrol (ABS) bei einer Spitzgusstemperatur unter 280°C hergestellt werden, wobei ein innerhalb eines Einfülltrichters (10) vorhandenes PA-ABS Granulat über einen Inertgaseinlass (11) mit einem trockenen Gas in Form von Stickstoff oder Argon beaufschlagt wird, wobei das Gas im Bereich eines Auslasses des Einfülltrichters eingebracht wird und durch eine Trichteröffnung entweicht, und derart zwischen dem Granulat befindliche oxidationsbildende Luft im Bereich der Granulatzuführung zur Spritzgussschnecke (9) verdrängt und die Kavitäten des Spritzgusswerkzeuges (12, 16) mittels Inertgas beaufschlagt werden.

2. Verfahren nach Anspruch 1, **dadurch gekennzeichnet, dass** eine Mischung aus PA66-ABS als Spritzgussmaterial verwendet wird.

3. Verfahren nach einem der vorhergehenden Ansprüche, **dadurch gekennzeichnet, dass** das PA-ABS der Spritzgussanlage über einen Granulat-Einfülltrichter (10) zugeführt wird, von dort einer Spitzgussschnecke (9) zugeführt wird, in der Spritzgussschnecke auf eine Temperatur von maximal 280° gebracht wird und von dort über eine Mehrzahl von Anspritzkanälen (20) einem Spritzgusswerkzeug (12, 16) zugeführt wird.

4. Verfahren nach einem der vorhergehenden Ansprüche, **dadurch gekennzeichnet, dass** im Spritzgusswerkzeug (12, 16) Kavitäten (15, 17) mit Fliesswegen von mehr als 180 mm ausgespritzt werden.

5. Verfahren nach einem der vorhergehenden Ansprüche, **dadurch gekennzeichnet, dass** die Mischung von PA mit ABS mittels Plastifizierung in einer handelsüblichen Spritzgussschnecke (9) unter Ausschluss von Sauerstoff erfolgt.

6. Verfahren nach einem der vorhergehenden Ansprüche, **dadurch gekennzeichnet, dass** für die Herstellung des Spitzgusswerkzeuges (12, 16) oder Teilen (22) des Spritzgusswerkzeuges ein Gas-durchlässigen Material verwendet wird.

7. Verfahren nach einem der vorhergehenden Ansprüche, **dadurch gekennzeichnet, dass** die in den Kavitäten (15, 17) des Spritzgusswerkzeuges (12, 16) enthaltene Luft bzw. Gas mittels Vakuumabsaugung zumindest teilweise entfernt wird.

8. Verfahren nach einem der vorhergehenden Ansprüche, **dadurch gekennzeichnet, dass** die außen liegenden Heißkanaldüsen des Spritzgusswerkzeugs individuell kaskadierend angesteuert werden.

## Claims

1. Method of producing a cover element (1) with lattice-type structures (2) for covering loudspeakers and air vents using a plastic injection moulding process, whereby the cover element (1) is produced as part of a moulding, such as a facing element, and comprises lattice-type structures (2) in only parts of its surface, and these lattice-type structures are surrounded at the edges by the solid moulding (3), and the cover element (1) is produced by means of a multi-component injection moulding process whereby the lattice-type structures (2) produced in a separate injection moulding process are positively joined to a moulding (3) of a non-lattice type in a second injection moulding process and finished to obtain a complete integral moulding, and the lattice-type structures (2) have a plurality of orifices and the lattice-type structures are at least partially surrounded by a shadow gap in order to reduce or avoid the formation of undesired joint lines which occur due to the melt flowing in a sinus shape past shape-imparting arches resulting in sinus waves which then affect the transition region, **characterised in that** the ratio of open surface to the total surface of the structures compared with a corresponding solid three-dimensional injection moulding is greater than 20%, in particular greater than 30%, and at least the lattice-type structures (2) of the cover element are produced from a mixture of polyamide (PA) and acrylonitrile butadiene styrene (ABS) at an injection moulding temperature of less than 280°C, and a PA-ABS granulate disposed inside an intake hopper (10) is exposed to a dry gas in the form of nitrogen or argon via an inert gas inlet (11), and the gas is introduced in the region of an outlet of the intake hopper and escapes through a hopper orifice, and oxidation-inducing air disposed between the granulate in the region of the granulate intake is purged to the injection moulding screw (9) and inert gas is applied to the cavities of the injection moulding tool (12, 16).

2. Method as claimed in claim 1, **characterised in that** a mixture of PA66-ABS is used as the injection moulding material.

3. Method as claimed in one of the preceding claims, **characterised in that** the PA-ABS is fed to the injection moulding plant through a granulate intake hopper (10) and is fed from there to an injection moulding screw (9), brought to a temperature of at most 280°C in the injection moulding screw and from there is fed via a plurality of injection channels (20) to an injection moulding tool (12, 16).

4. Method as claimed in one of the preceding claims, **characterised in that** cavities (15, 17) with flow paths of more than 180 mm are injected in the injection moulding tool (12, 16).

5. Method as claimed in one of the preceding claims, **characterised in that** the PA is mixed with ABS by means of plasticization in a standard injection moulding screw (9) whilst excluding oxygen.

6. Method as claimed in one of the preceding claims, **characterised in that** a gas-permeable material is used to produce the injection moulding tool (12, 16) or parts (22) of the injection moulding tool.

7. Method as claimed in one of the preceding claims, **characterised in that** the air or gas contained in the cavities (15, 17) of the injection moulding tool (12, 16) is at least partially removed by means of vacuum suction.

8. Method as claimed in one of the preceding claims, **characterised in that** the outwardly lying hot passage nozzles of the injection moulding tool are individually activated on a cascading basis.

## Revendications

1. Procédé de fabrication d'un élément de recouvrement (1) à structures réticulaires (2), destiné à recouvrir des ouvertures de haut-parleur et des ouvertures d'aération, par le procédé de moulage par injection, ledit élément de recouvrement (1) étant réalisé comme une partie d'un corps moulé, tel qu'un élément d'habillage et ne comportant des structures réticulaires (2) que dans certaines parties de sa surface, le bord desdites structures réticulaires étant entouré par le corps moulé (3) couvrant toute la surface, ledit élément de recouvrement (1) étant réalisé par moulage par injection de plusieurs composants, lesdites structures réticulaires (2), réalisées dans un processus de moulage par injection, étant reliées par force avec un corps moulé (3) non réticulaire dans un deuxième processus de moulage par injection pour former un corps moulé complet d'une seule pièce, lesdites structures réticulaires (2) comportant une pluralité d'ouvertures, lesdites structures réticulaires étant entourées au moins en partie par un joint aveugle pour diminuer ou éviter la formation de rides indésirables qui sont générées par le matériau en fusion s'écoulant sous forme sinusoïdale le long des dômes de moulage et par des ondes sinusoïdales qui en résultent et se répercutent dans la zone de transition, **caractérisé en ce que** le rapport entre la surface d'ouverture et la surface totale des structures est supérieur de 20 %, en particulier supérieur de 30 % à celui d'un corps moulé par injection correspondant, tridimensionnel sur toute la surface, au moins les structures réticulaires (2) de l'élément de recouvrement étant réalisées à une température de moulage par injection inférieure à 280°C à partir d'un mélange de polyamide (PA) et d' acryl-butadiène-styrène (ABS), les granulés de PA-ABS présents à l'intérieur d'une trémie de remplissage (10) recevant, par l'intermédiaire d'une entrée de gaz inerte (11), un gaz sec sous forme d'azote ou d'argon, ledit gaz étant introduit dans la zone d'une sortie de la trémie de remplissage et s'échappant par une ouverture de la trémie, et ainsi l'air générant l'oxydation, présent entre les granulés, étant refoulé dans la zone de l'admission des granulés vers la vis transporteuse (9) de la presse d'injection et les cavités du moule pour injection (12, 16) étant alimentées par un gaz inerte.

2. Procédé selon la revendication 1, **caractérisé en ce que** le matériau de moulage par injection utilisé est un mélange de PA66-ABS.

3. Procédé selon l'une quelconque des revendications précédentes, **caractérisé en ce que** le PA-ABS de l'installation de moulage par injection est acheminé via une trémie de remplissage (10) pour les granulés, à partir de laquelle il est acheminé vers une vis transporteuse (9) de la presse d'injection, est porté à une température de 280°C maximum dans la vis transporteuse, et à partir de celle-ci est acheminé vers un moule pour injection (12, 16) via une pluralité de canaux d'injection (20).

4. Procédé selon l'une quelconque des revendications précédentes, **caractérisé en ce que**, dans le moule pour injection (12, 16), des cavités (15, 17) avec des voies d'écoulement de plus de 180 mm reçoivent le matériau d'injection.

5. Procédé selon l'une quelconque des revendications précédentes, **caractérisé en ce que** le mélange du PA et du ABS est obtenu sous exclusion d'oxygène par plastification dans une vis transporteuse (9) usuelle.

6. Procédé selon l'une quelconque des revendications précédentes, **caractérisé en ce que** l'on utilise un matériau perméable au gaz pour la réalisation du moule pour injection (12, 16) ou de parties (22) du moule pour injection.

7. Procédé selon l'une quelconque des revendications précédentes, **caractérisé en ce que** l'air ou le gaz contenu dans les cavités (15, 17) du moule pour injection (12, 16) est éliminé au moins en partie par une aspiration sous vide.

8. Procédé selon l'une quelconque des revendications précédentes, **caractérisé en ce que** les buses des canaux chauds du moule pour injection, situées à l'extérieur, sont commandées individuellement en cascade.
